# EUROPÄISCHE PATENTSCHRIFT

(11) **EP 1 530 526 B1**
(45) Veröffentlichungstag und Bekanntmachung des Hinweises auf die Patenterteilung: **15.10.2008**
(21) Anmeldenummer: 03750416.4
(22) Anmeldetag: 18.08.2003
(51) Int. Cl.: B60R 25/00, H04L 12/10, G07C 9/00, H04B 13/00

(54) **SCHALTUNGSANORDNUNG ZUR SELEKTIVEN SCHALTSIGNALGENERIERUNG**
CIRCUIT FOR SELECTIVELY PRODUCING SWITCHING SIGNALS
CIRCUIT DE PRODUCTION SELECTIVE DE SIGNAUX DE COMMUTATION

(30) Priorität: 15.08.2002 DE 10238134; 10.02.2003 DE 10305342; 10.02.2003 DE 10305341; 08.04.2003 DE 10315845
(43) Veröffentlichungstag der Anmeldung: 18.05.2005
(73) Patentinhaber: Ident Technology AG, 82131 Gauting (DE)
(72) Erfinder: DONAT, Stefan, 82211 Herrsching (DE); RICHTER, Wolfgang, 82110 Germering (DE); ROSENBECK, Peter, 82131 Gauting (DE)
(74) Vertreter: Rössig, Rolf
(86) Internationale Anmeldenummer: PCT/EP2003/009136
(87) Internationale Veröffentlichungsnummer: WO 2004/078536

(56) Entgegenhaltungen:
- EP-A- 1 033 687
- EP-A- 1 168 678
- US-A- 5 811 897
- US-B1- 6 211 799

## Beschreibung

Die Erfindung betrifft eine Schaltungsanordnung zur selektiven Schaltsignalgenerierung. Weiterhin betrifft die Erfindung auch ein Verfahren zur selektiven Generierung eines Schaltsignals insbesondere zur Ansteuerung von Funktionskomponenten eines Kraftfahrzeugs.

Aus US-A-5811897 ist ein Verfahren zur Bereitstellung von Schaltsignalen bekannt bei welchem im Rahmen der Betätigung einer Schalteinrichtung in den Anwender ein elektrisches Signal eingekoppelt wird.

Der Erfindung liegt die Aufgabe zugrunde, Lösungen bereitzustellen, die es ermöglichen, bei einem System das mehrere von einem Anwender betätigbare Schalteinrichtungen umfasst die zur Koordination von Schaltabläufen maßgebliche Schaltsignale auf vorteilhafte Weise zu generieren.

Diese Aufgabe wird erfindungsgemäß durch ein Verfahren mit den in Patentanspruch 1 angegebenen Merkmalen gelöst.

Dadurch wird es auf vorteilhafte Weise möglich, funktionell frei belegbare Schalteinrichtungen an gewünschter, ergonomisch vorteilhafter Stelle anzuordnen und hierbei ein den jeweiligen Anforderungen verbessert Rechnung tragendes Bedienumfeld zu schaffen. In vorteilhafter Weise ergibt sich gegenüber herkömmlichen Konzepten ein deutlich verminderter Verkabelungsaufwand. Vorzugsweise sind mehrere Schalteinrichtungen vorgesehen, wobei die Schalteinrichtungen derart konfiguriert sind, dass im Zusammenspiel mit einer Berührung derselben Signalsequenzen oder Signale mit unterschiedlichem Informationsinhalt generiert werden. Hierdurch wird es insbesondere möglich, tastselektiv - z.B. durch Berührung der ausgewählten Schalteinrichtung mit dem Zeigefinger - die Signalübertragung zu veranlassen.

Vorzugsweise wird das Einrichtungssignal über den Anwender zu einer zentralen Erfassungszone übertragen. Diese zentrale Erfassungszone kann bei einer Anwendung im Kraftfahrzeug beispielsweise durch ein Fahrzeuglenkrad oder eine Sitzflächenelektrode gebildet sein - die mit einer entsprechenden Signalauswertungseinrichtung gekoppelt ist.

Das Einrichtungssignal wird vorzugsweise auf Grundlage feldelektrischer Wechselwirkungseffekte in den Anwender eingekoppelt.

Das Einrichtungssignal enthält in vorteilhafter Weise ein Datentelegramm. Das Datentelegramm kann einerseits der Identifizierung der Schalteinrichtung dienen, andererseits kann es auch Informationen über die Art der Betätigung der Schalteinrichtung enthalten. Es ist möglich, an der Schalteinrichtung Zonen vorzusehen die unterschiedliche Informationsinputs in das mittels der Schalteinrichtung generierte Schaltsignal liefern. So ist es möglich, z.B. für eine Temperatursteuerung an der Schalteinrichtung einen graphisch, insbesondere farblich markierten Schaltbereich vorzusehen, wobei in dem Schaltbereich ortsabhängig z.B. sich von links nach rechts ändernde Signalinhalte in dem Einrichtungssignal enthalten sind. Diese Signalinhalte können als Datentelegramm, hochfrequent in dem Einrichtungssignal enthalten sein, oder beispielsweise auch durch einen Pulsabstand dieser Einrichtungssignale definiert sein.

Es ist möglich, im Bereich der Schalteinrichtung einen Drehknopf vorzusehen, so dass das Einrichtungssignal in Abhängigkeit von der Betätigung, d.h. der Drehung des Drehknopfes der Schalteinrichtung determiniert und generiert wird. Das in Abhängigkeit von der Drehung des Drehknopfes generierte Einrichtungssignal kann während der Betätigung des Knopfes im Rahmen des hierbei bestehenden Berührungskontakt über den Anwender übertragen werden.

Es ist möglich, über eine anwenderseitig körpernah getragene Schlüsseleinrichtung weiteren Einfluss auf die Schaltsignalgenerierung zunehmen, insbesondere indem ein Schlüsselsignal generiert wird, das ebenfalls in den Anwender eingekoppelt wird.

Das Schaltsignal kann dann in Abhängigkeit davon generiert werden, ob eine die Schlüsseleinrichtung im Bereich des Anwenders vorhanden ist und/oder definierte Signalmuster bereitstellt. So ist es möglich, bestimmte Schaltsignale nur dann zu generieren, wenn der Anwender sich in einem definierten Bereich, z.B. auf dem Fahrzeugsitz befindet und dieser zudem eine Schlüsseleinrichtung - beispielsweise in Form einer scheckkartenartigen Karte - bei sich trägt.

Es ist möglich, auf dieser Schlüsseleinrichtung eine Signalzwischenverarbeitung durchzuführen, so dass zumindest ein Teil der seitens der Schalteinrichtungen in den Anwender eingekoppelten Einrichtungssignale im Bereich der Schlüsseleinrichtung verarbeitet werden und die hierbei ermittelten Auswertungsresultate Eingang in ein seitens der Schlüsseleinrichtung ausgegebenes, z.B. über eine Sitzflächen- oder Lenkradelektrode abgegriffenes Datentelegramm finden.

Das System kann derart aufgebaut sein, dass bei Berührung der Schalteinrichtung durch den Anwender an diesen (durch die Schalteinrichtung) ein schwingungsfähiges System angekoppelt wird, und dass Mittel vorgesehen sind durch die feststellbar ist, ob der Anwender mit jenem schwingungsfähigen System gekoppelt ist, und dass in Abhängigkeit davon, ob festgestellt wird, dass ein Kopplungszustand mit dem schwingungsfähigen System besteht, das Schaltsignal generiert wird.

Das schwingungsfähige System wird hierbei vorzugsweise über einen hinreichend intensiven Berührungskontakt oder hinreichend körpernahe Elektrodeneinrichtung auf kapazitivem Wege mit dem Anwender gekoppelt.

Vorzugsweise wird in den Anwender auf kapazitivem Wege ein Signalereignis eingekoppelt, und in Abhängigkeit von einem Ereignisabsorptionsvermögen das Schaltsignal generiert. Die Schalteinrichtung kann hierbei eine modulierte Signalsenke bilden. Die Modulation der Senke kann schalteinrichtungsspezifisch erfolgen. Weiterhin kann die Modulation der Senke in Abhängigkeit von einem Signalinhalt des in den Anwender eingekoppelten Signalereignis erfolgen.

Die eingangs angegebene Aufgabe wird weiterhin auch gelöst durch ein Schaltsystem zur Bereitstellung von Schaltsignalen bei weichem jene Schaltsignale in Abhängigkeit davon generiert werden, ob eine Schalteinrichtung durch einen Anwender selektiv betätigt wird, wobei sich dieses System dadurch auszeichnet, dass die Schalteinrichtung derart ausgebildet ist, dass im Rahmen der Betätigung der Schalteinrichtung in den Anwender ein Einrichtungssignal eingekoppelt und durch den Anwender zu einer Erfassungszone übertragen wird, und die Erfassungszone mit einem Schaltsignalgenerator gekoppelt ist der derart konfiguriert ist, dass dieser auf Grundlage des in den Anwender eingekoppelten Einrichtungssinals das Schaltsignal generiert.

Die Schalteinrichtung weist vorzugsweise wenigstens eine Schaltkontaktzone auf. Hierdurch wird es möglich, ein für eine gewünschte Schaltzustandsänderung indikatives Signal zu erzeugen. Die Schalteinrichtung kann auch mehrere Schaltkontaktzonen aufweisen. Hierdurch wird es möglich, Schaltsignale zu generieren, die beispielsweise eine Schaltzustandswahl in einem Einstellbereich ermöglichen.

Die Schalteinrichtung kann Sensorflächen oder auch manuell betätigbare Schaltmittel wie z.B. Drehknöpfe aufweisen wobei in Abhängigkeit von der manuellen Betätigung der Schaltmittel jener manuellen

Betätigung Rechnung tragende Einrichtungssignale generiert und in den Anwender eingekoppelt werden können.

Die Schalteinrichtung ist beispielsweise in Form von Steck- oder klebbaren Schaltmitteln mit integrierten Kodierschaltungen im Armaturenberettbereich oder auch an einem Schalthebel anbringbar.

Die Erfindung erstreckt sich weiterhin auch auf ein Schaltsystem zur Bereitstellung von Schaltsignalen bei welchem jene Schaltsignale in Abhängigkeit davon generiert werden, ob eine im Bereich eines Anwenderumfeldes vorgesehene Schalteinrichtung durch einen Anwender selektiv betätigt wird, die sich dadurch auszeichnet, dass die Schalteinrichtung derart ausgebildet ist, dass im Rahmen der Betätigung der Schalteinrichtung in den Anwender ein Einrichtungssignal eingekoppelt und durch den Anwender zu einer Erfassungszone übertragen wird, und die Erfassungszone mit einem Schaltsignalgenerator gekoppelt ist der derart konfiguriert ist, dass dieser auf Grundlage des in den Anwender eingekoppelten Einrichtungssinals das Schaltsignal generiert.

In vorteilhafter Weise kann hierbei der Anwender oder Bediener identifiziert werden indem dieser über eine Sitzfläche in das Schaltsystem einbezogen ist. Dazu müssen schwache Signale über den Schalter, den ihn betätigenden (Zeige-) Finger und den Körper des Bedieners in den Sitz geleitet werden. Dies geschieht in vorteilhafter Weise auf kapazitivem Wege mit Wechselspannungssignalen.

Beispielsweise ist ein Schalter oder Sensortaster an einem Anschluss mit einer Signalquelle verbunden, die eine Frequenz im Kilohertzbereich in diesen einspeist. Im Sitz des Bedieners befindet sich eine leitende Fläche, die das Signal aufnehmen kann, wenn dieser den Schalter berührt und damit das Signal (kapazitiv) über seinen Finger auf seine Haut überträgt (sog. Body-Bridge). Diese bildet dann die kapazitive Gegenfläche zum Sitz. Eine bereits im Sitz vorhandene Heizfolie kann beispielsweise als Empfangsfläche verwendet werden. Ein daran angeschlossener Empfänger detektiert das derart eingespeiste Signal. Der Schalter erfüllt außerdem seine bestimmungsgemäße Funktion.

Weitere Einzelheiten und Merkmale der oben angegebenen, jeweils für sich oder auch in Kombination miteinander verwirklichten Erfindungskomplexe ergeben sich aus der nachfolgenden Beschreibung in Verbindung mit der Zeichnung. Es zeigt:
- Figur 1: eine Schemadarstellung zu Erläuterung einer ersten Schaltungsvariante;
- Figur 2: eine Schemadarstellung zu Erläuterung einer ersten Schaltungsvariante;
- Figur 3: eine Schemadarstellung zu Erläuterung einer ersten Schaltungsvariante;

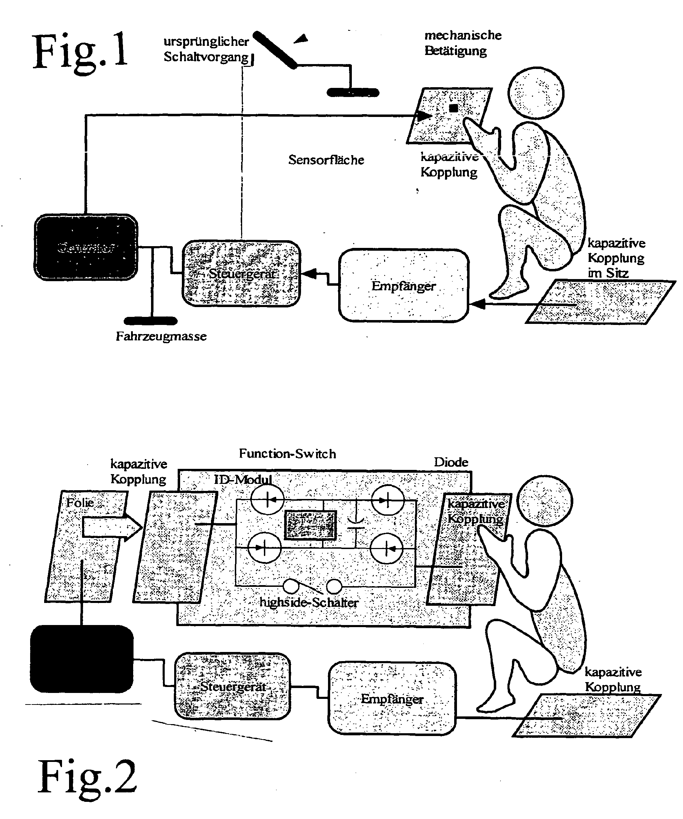

### Zu Figur 1 - einfaches Funktionsprinzip

Ein erfindungsgemäß besonders vorteilhafter Weg, den Bediener zu identifizieren ist, ihn und seine Sitzposition in den Schaltvorgang mit einzubeziehen. Dazu werden schwache Signale über den Schalter, den ihn betätigenden (Zeige-) Finger und dem Körper des Bedieners in den Sitz geleitet. Dies geschieht auf kapazitivem Wege mit Wechselspannungssignalen.

Ein Schalter oder Sensortaster ist an einem Anschluss mit einer Signalquelle verbunden, die eine Frequenz im Kilohertzbereich in diesen einspeist. Im Sitz des Bedieners befindet sich eine leitende Fläche, die das Signal aufnehmen kann, wenn dieser den Schalter berührt und damit das Signal (kapazitiv) über seinen Finger auf seine Haut überträgt (sog. Body-Bridge). Diese bildet dann die kapazitive Gegenfläche zum Sitz. Eine bereits im Sitz vorhandene Heizfolie kann beispielsweise als Empfangsfläche verwendet werden. Ein daran angeschlossener Empfänger detektiert das derart eingespeiste Signal. Der Schalter erfüllt außerdem seine bestimmungsgemäße Funktion.

### Zu Figur 2: - erweitertes Funktionsprinzip

Um den (Verdrahtungs-) Aufwand zu reduzieren und den Einsatz mehrerer Sensor/Taster/Schalter zu differenzieren wird das Generatorsignal an eine leitende Fläche, z.B. im Armaturenbrett geführt. Beim

Berühren eines darüber angebrachten Sensors wird (über die Haut des Bedieners und die Sitzfolie) ein Wechselstromkreis geschlossen; im betreffenden Sensor wird die Wechselspannung gleichgerichtet und in einem Kondensator gespeichert. Mit dieser Gleichspannung wird ein Register, welches eine Identifizierungsnummer enthält, bitweise an einen elektronischen (high-side) Schalter geführt, der die Belastung des Wechselstromkreises verändert. Ein geeigneter Empfänger detektiert die Identifizierungsnummer und leitet diese weiter an das Steuergerät, welches den Schaltvorgang vornimmt.

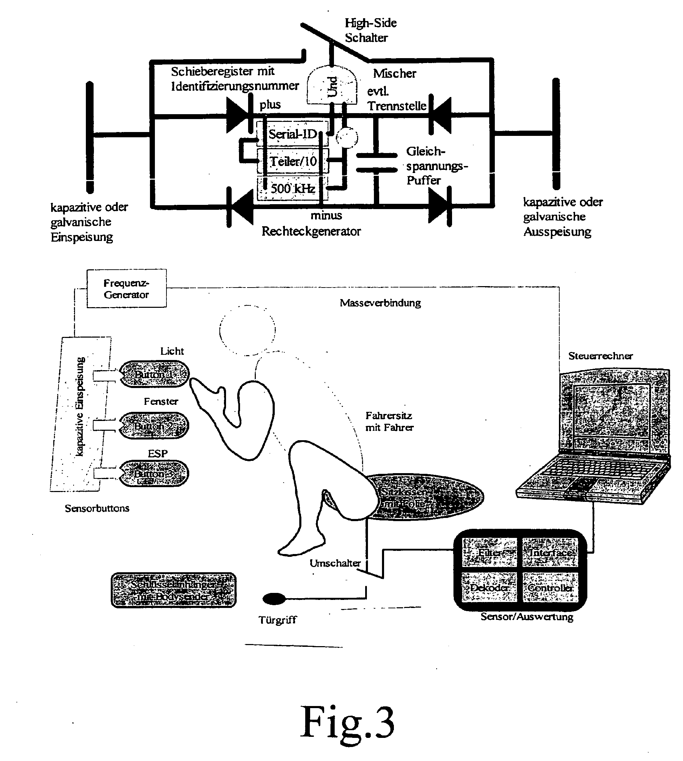

### Zu. Figur 3:

Ein Bereich eines KFZ-Armaturenbretts wird von der Unterseite mit einer leitenden Folie versehen. Oberhalb dieser Fläche werden mehrere der zuvor beschriebenen Funktionsgeber angebracht, z.B. magnetisch oder aufgeklebt. Die Geber weisen alle unterschiedliche Identifizierungsnummern auf. Beim Berühren eines solchen Gebers wird wieder die "Body-Bridge" durch den Bediener geschlossen und über dessen Sitz vom Empfänger ausgewertet. Wenn am Beifahrersitz auch ein Empfänger angeschlossen wird, kann z.B. die Betätigung von Funktionsgebern auf der Mittelkonsole, etwa für Licht, Heizung, Sitzverstellung u.s.w. dem jeweiligen Bediener (Fahrer oder Beifahrer) zugeordnet werden. Neben dem geringen Installationsaufwand werden so auch Schalter eingespart und der Komfort erhöht.

### Praktische Nebeneffekte und weitere Vorteile

Die Annäherung einer Hand kann schon vor der eigentlichen Sensorbetätigung detektiert werden, denn diese nimmt die "Aura" des frequenten elektrischen Feldes der Folie auf, die durch den Generator gespeist wird. Dies kann beispielsweise dazu verwendet werden, die entsprechende Stelle auf dem Armaturenbrett zu beleuchten. Außerdem kann die Sitzbelegung festgestellt werden um z.B. bei unbesetzten Beifahrersitz dessen Airbag abzuschalten. Die Generatorfrequenz kann auch nur als "Speisung" für die Sensorknöpfe verwendet werden, diese können dann bei Berührung eine eigene Frequenz bereitstellen die mit dem Identifizierungscode moduliert ist. Die Sensorknöpfe können auch mit Handschuhen bedient werden. Der Schaltzustand der Funktionsknöpfe kann im Sichtbereich des Fahrers dargestellt werden. Die Funktionsknöpfe sind im Bereich der Einspeisefolie frei und individuell positionierbar, auch eine Positionierung am Lenkrad ist möglich, wenn dieses mit der Einspeisefrequenz beaufschlagt wird. Temporäre Serviceknöpfe können von den Werkstätten benutzt werden. Die Signal-Richtung kann auch umgekehrt werden; beispielsweise können von den Sitzflächen unterschiedliche Frequenzen ausgegeben und durch Berührung über die Funktionsknöpfe und das Armaturenbrett an einen einzigen Empfänger geleitet werden. Die Differenzierung der Bediener erfolgt dann über die Einspeisefrequenz.

### Anwendungsbeispiele

Die Freigabe einer elektrischen Handbremse kann nur durch den Fahrer erfolgen. Eine Kopfstütze kann immer den richtigen Abstand zum Hinterkopf einstellen, wenn die zuvor erwähnte "Aura" hierzu verwendet wird. Ein Verkaufsregal kann mit solchen Funktionsknöpfen beaufschlagt werden. Berührt ein Kunde einen solchen Knopf, so wird dessen Identifikationsnummer über den Kunden an eine, im Boden untergebrachten Folie geleitet, und es kann eine elektronische Produktpräsentation erfolgen, etwa indem auf einer Darstellungsfläche ein Film über das Produkt gezeigt wird. Auch könnte die Betätigung eines solchen Funktionsknopfes über das Handytelefon des betätigenden Konsumenten (mit einem entsprechenden Empfänger ausgestattet) an ein Portal weitergeleitet werden. In Flugzeugen kann ein Melde- und Lichtsystem mit dieser Technik den Verdrahtungsaufwand erheblich reduzieren.

### Verbesserte Wechselspannungsspeisung

Durch LC-Resonanzkreise kann der Pegel bei der Einspeisung und/oder in den Funktionsknöpfen beträchtlich erhöht werden.

Durch das erfindungsgemäße Schaltsystem wird es möglich, z.B. die Auswahl der Getriebeübersetzung (z.B. bei einer Tiptronic-Schaltung) nur durch eine Person zuzulassen, die auf dem Fahrersitz sitzt und ggf. eine mobile Schlüsseleinrichtung trägt. Insbesondere hierbei ist z.B. an einem Ganghebel eine Signalübertragungsfläche ausgebildet, die bei Berührungskontakt mit der Handfläche des Fahrers - über den Körper des Fahrers einen Datentransfer zwischen der mobilen Schlüsseleinrichtung und einer weiteren fahrzeugseitigen Signalverarbeitungseinrichtung ermöglicht.

Die vorzugsweise in Kombination mit dem erfindungsgemäßen System vorgesehene mobile Schlüsseleinrichtung kann auch Daten übertragen, die beispielsweise zur benutzerindividuellen Konfiguration der Fahrzeugausstattung herangezogen werden können. So ist es beispielsweise möglich, über die mobile Schlüsseleinrichtung eine benutzerspezifische Kennung oder auch vollständige Konfigurationsdaten auszugeben, so dass beispielsweise der Fahrersitz, die Spiegel und weitere seitens des Anwenders bevorzugte Einstellungen am Fahrzeug selbsttätig herbeigeführt werden.

Über die mobile Schlüsseleinrichtung kann auch ein Datensatz zur Führung eines elektronischen Fahrtenbuches, oder zur Fahrtkostenbestimmung zu - oder von einer fahrzeugseitigen Signalverarbeitungseinrichtung übertragen werden.

Es ist möglich, im Fahrzeuginnenbereich Schaltflächen vorzusehen, über die ein Signaltransfer zwischen der mobilen Schlüsseleinrichtung und der fahrzeugseitigen Signalverarbeitungseinrichtung ausgeführt werden kann. Insbesondere für Schaltflächen im Bereich einer Fahrzeugmittelkonsole wird es möglich anhand der ggf. erfolgenden Signaleinkoppelung der durch die mobile Schlüsseleinrichtung generierten Signale in die Schaltfläche, zu überprüfen, ob die Schaltflächen vom autorisierten Nutzer oder z.B von einem nichtautorisierten Beifahrer betätigt wurden. Es ist auch möglich im Wege der Signaleinkoppelung zu überprüfen von welchem Fahrer/Fahrgast eine Betätigung der Schaltflächen erfolgt. Es ist möglich z.B. zur Ansteuerung eines elektrischen Fensterhebers im Bereich der Mittelkonsole eine Schalterfläche vorzusehen, wobei bei Berührung der Schalterfläche durch den Fahrer das fahrerseitige Fenster, und bei Berührung derselben Schalterfläche durch den Beifahrer, das beifahrerseitige Fenster angesteuert wird.

Zur Unterscheidung von welchem Fahrer/Fahrgastplatz aus eine Schalt- oder Schalterfläche bedient wird ist es auch möglich, unabhängig von der mobilen Schlüsseleinrichtung in den jeweiligen Fahrgast ein Signal einzukoppeln, das eine Unterscheidung ermöglicht. Diese Signaleinkoppelung kann insbesondere über die Sitzfläche erfolgen. Hierzu ist in der Sitzfläche vorzugsweise eine Elektrode - beispielsweise in Form einer leitfähigen, flexiblen Gewebeeinlage - vorgesehen, über die sitzplatzspezifische Signale in den jeweiligen Sitzplatznutzer eingekoppelt werden. Über dieses Konzept lassen sich insbesondere auch Kindersicherungen realisieren.

Es ist möglich, den Signaltransfer über den Sitzplatznutzer so abzuwickeln, dass dieser vom Sitzplatz zu der jeweils berührten Schalt- oder Schalterfläche fließt. Es ist auch möglich, über die Schalt- oder Schalterflächen in den Sitzplatznutzer ein Schalterspezifisches

Signal einzukoppeln, das über die Sitzflächenelektrode einer weiteren Signalverarbeitung zugeführt werden kann. Auch bei diesen Systemen bildet der Körper des Fahrers/Sitzplatznutzers ein Teil der Signalübertragungsstrecke.

## Patentansprüche

1. Verfahren zur Bereitstellung von Schaltsignalen bei einem mehrere Schalteinrichtungen umfassenden System, wobei jene Schaltsignale in Abhängigkeit davon generiert werden, ob eine Schalteinrichtung durch einen Anwender selektiv betätigt wird, wobei im Rahmen der Betätigung der Schalteinrichtung in den Anwender ein Einrichtungssignal eingekoppelt und durch den Anwender übertragen wird, und auf Grundlage des in den Anwender eingekoppelten Einrichtungssinals das Schaltsignal generiert wird, wobei jede Schalteinrichtung ein schalteinrichtungsspezifisches Einrichtungssignal generiert.

2. Verfahren nach Anspruch 1, **dadurch gekennzeichnet, dass** das Einrichtungssignal über den Anwender zu einer zentralen Erfassungszone übertragen wird.

3. Verfahren nach Anspruch 1 oder 2, **dadurch gekennzeichnet, dass** Einrichtungssignal auf Grundlage feldelektrischer Wechselwirkungseffekte in den Anwender eingekoppelt wird.

4. Verfahren nach wenigstens einem der Ansprüche 1 bis 3, **dadurch gekennzeichnet, dass** das Einrichtungssignal ein Datentelegramm enthält.

5. Verfahren nach wenigstens einem der Ansprüche 1 bis 4, **dadurch gekennzeichnet, dass** das Einrichtungssignal in Abhängigkeit von der Betätigung der Schalteinrichtung generiert wird.

6. Verfahren nach wenigstens einem der Ansprüche 1 bis 5, **dadurch gekennzeichnet, dass** über eine anwenderseitig körpernah getragene Schlüsseleinrichtung ein Schlüsselsignal generiert wird, das ebenfalls in den Anwender eingekoppelt wird.

7. Verfahren nach wenigstens einem der Ansprüche 1 bis 6, **dadurch gekennzeichnet, dass** das Schaltsignal in Abhängigkeit davon generiert wird, ob eine die Schlüsseleinrichtung im Bereich des Anwenders vorhanden ist und/oder definierte Signalmuster bereitstellt.

8. Verfahren nach wenigstens einem der Ansprüche 1 bis 7, **dadurch gekennzeichnet, dass** die zentrale Erfassung über eine Sitzflächenelektrode erfolgt.

9. Verfahren nach wenigstens einem der Ansprüche 1 bis 8, **dadurch gekennzeichnet, dass** die Sitzflächenelektrode in einen Fahrzeugsitz integriert ist.

10. Verfahren nach wenigstens einem der Ansprüche 1 bis 9, **dadurch gekennzeichnet, dass** bei Berührung der Schalteinrichtung durch den Anwender an diesen ein schwingungsfähiges System angekoppelt wird, und dass Mittel vorgesehen sind durch die feststellbar ist, ob der Anwender mit jenem schwingungsfähigen System gekoppelt ist, und dass in Abhängigkeit davon ob festgestellt wird, dass ein Kopplungszustand mit dem schwingungsfähigen System besteht, das Schaltsignal generiert wird.

11. Verfahren nach wenigstens einem der Ansprüche 1 bis 10, **dadurch gekennzeichnet, dass** das schwingungsfähige System über einen Berührungskontakt auf kapazitivem Wege mit dem Anwender gekoppelt wird.

12. Verfahren nach wenigstens einem der Ansprüche 1 bis 11, **dadurch gekennzeichnet, dass** in den Anwender auf kapazitivem Wege ein Signalereignis eingekoppelt wird, und dass in Abhängigkeit von einem Ereignisabsorptionsvermögen das Schaltsignal generiert wird.

13. Verfahren nach wenigstens einem der Ansprüche 1 bis 12, **dadurch gekennzeichnet, dass** die Schalteinrichtung eine modulierte Signalsenke bildet.

14. Verfahren nach wenigstens einem der Ansprüche 1 bis 13, **dadurch gekennzeichnet, dass** die Modulation der Senke schalteinrichtungsspezifisch erfolgt.

15. Verfahren nach wenigstens einem der Ansprüche 1 bis 14, **dadurch gekennzeichnet, dass** die Modulation der Senke in Abhängigkeit von einem Signalinhalt des in den Anwender eingekoppelten Signalereignis erfolgt.

16. Schaltungsanordnung mit mehreren Schalteinrichtungen zur Durchführung des Verfahrens nach wenigstens einem der Ansprüche 1 bis 15.

## Claims

1. A method for the provision of switching signals in a system comprising of several switch devices, whereby the switching signals are generated depending on whether a switch device is actuated selectively by a user, whereby within the framework of actuation of the switch device a unidirectional signal is coupled with the user and transmitted by the user, and the switching signal is generated on the basis of the unidirectional signal coupled with the user whereby each switch device generates a switch device-specific unidirectional signal.

2. A method in accordance with claim 1 and **characterised by** the fact that the unidirectional signal is transmitted via the user to a central registration zone.

3. A method in accordance with claims 1 and 2 and **characterised by** the fact that the unidirectional signal is coupled with the user on the basis of field-electric interactive effects.

4. A method in accordance with at least one of the claims 1 to 3 and **characterised by** the fact that the unidirectional signal contains a data telegram.

5. A method in accordance with at least one of the claims 1 to 4 and **characterised by** the fact that the unidirectional signal is generated in dependence on the actuation of the switch device.

6. A method in accordance with at least one of the claims 1 to 5 and **characterised by** the fact that a key device carried on the person of the user generates a key signal which is also coupled with the user.

7. A method in accordance with at least one of the claims 1 to 6 and **characterised by** the fact that the switching signal is generated depending on whether the key device is in the proximity of the user and/or provides defined signal patterns.

8. A method in accordance with at least one of the claims 1 to 7 and **characterised by** the fact the central registration takes place via a seat electrode.

9. A method in accordance with at least one of the claims 1 to 8 and **characterised by** the fact that the seat electrode is integrated in a vehicle seat.

10. A method in accordance with at least one of the claims 1 to 9 and **characterised by** the fact that when the user touches the switch device he is coupled with an oscillating system and that means are provided to establish whether the user is coupled with this oscillating system, and that the switching signal is generated depending on whether it is established that the user is coupled with the oscillating system.

11. A method in accordance with at least one of the claims 1 to 10 and **characterised by** the fact the oscillating system is coupled with the user by capacitive means via a touch contact.

12. A method in accordance with at least one of the claims 1 to 11 and **characterised by** the fact that a signal event is coupled with the user by capacitive means and that the switching signal is generated depending on the capacity to absorb an event.

13. A method in accordance with at least one of the claims 1 to 12 and **characterised by** the fact the switch device forms a modulated signal sink.

14. A method in accordance with at least one of the claims 1 to 13 and **characterised by** the fact that the modulation of the sink takes place on a switch device-specific basis.

15. A method in accordance with at least one of the claims 1 to 14 and **characterised by** the fact that the modulation of the sink takes place depending on the signal content of the signal event coupled into the user.

16. Circuit arrangement with several switch devices for execution of the method in accordance with one of the claims 1 to 15.

## Revendications

1. Procédé pour la mise à disposition de signaux de commutation dans un système comprenant plusieurs dispositifs de commutation, lesdits signaux de commutation étant générés en fonction de l'actionnement sélectif d'un dispositif de commutation par l'utilisateur, dans le cadre de l'actionnement du dispositif de commutation un signal d'installation étant couplé dans l'utilisateur et transmis par l'utilisateur, et sur la base du signal d'installation couplé dans l'utilisateur, le signal de commutation étant généré, chaque dispositif de commutation générant un signal d'installation spécifique du dispositif de commutation.

2. Procédé selon la revendication 1, **caractérisé en ce que** le signal d'installation est transmis par l'intermédiaire de l'utilisateur à une zone de saisie centrale.

3. Procédé selon les revendications 1 ou 2, **caractérisé en ce que** le signal d'installation est couplé dans l'utilisateur sur la base d'effets d'interaction de champ électrique.

4. Procédé selon au moins l'une des revendications 1 à 3, **caractérisé en ce que** le signal d'installation comprend un télégramme de données.

5. Procédé selon au moins l'une des revendications 1 à 4, **caractérisé en ce que** le signal d'installation est généré en fonction de l'actionnement du dispositif de commutation.

6. Procédé selon au moins l'une des revendications 1 à 5, **caractérisé en ce que** moyennant un dispositif clé porté près du corps côté utilisateur, un signal clé est généré qui est également couplé dans l'utilisateur.

7. Procédé selon au moins l'une des revendications 1 à 6, **caractérisé en ce que** le signal de commutation est généré en fonction de la question de savoir si un dispositif clé est présent dans la zone de l'utilisateur et/ou met à disposition des modèles de signaux définis.

8. Procédé selon au moins l'une des revendications 1 à 7, **caractérisé en ce que** la saisie centrale se fait par l'intermédiaire d'une électrode d'assise.

9. Procédé selon au moins l'une des revendications 1 à 8, **caractérisé en ce que** l'électrode d'assise est intégrée dans un siège de véhicule.

10. Procédé selon au moins l'une des revendications 1 à 9, **caractérisé en ce qu'**au contact du dispositif de commutation par l'utilisateur, un système capable d'osciller est couplé à ce dernier, et que des moyens sont prévus par lesquels on peut constater si l'utilisateur est couplé avec ledit système capable d'osciller, et qu'en fonction de constatation de l'état de couplage avec le système capable d'osciller, le signal de commutation est généré.

11. Procédé selon au moins l'une des revendications 1 à 10, **caractérisé en ce que** le système capable d'osciller est couplé à l'utilisateur de manière capacitive par l'intermédiaire d'un contact tactile.

12. Procédé selon au moins l'une des revendications 1 à 11, **caractérisé en ce qu'**un événement de signal est couplé de manière capacitive dans l'utilisateur et qu'en fonction de la capacité d'absorption de l'événement, le signal de commutation est généré.

13. Procédé selon au moins l'une des revendications 1 à 12, **caractérisé en ce que** le dispositif de commutation forme un niveau de signal moins élevé, modulé.

14. Procédé selon au moins l'une des revendications 1 à 13, **caractérisé en ce que** la modulation du niveau moins élevé se fait spécifiquement par dispositif de commutation.

15. Procédé selon au moins l'une des revendications 1 à 14, **caractérisé en ce que** la modulation du niveau moins élevé se fait en fonction d'un contenu de signa de l'événement de signal couplé dans l'utilisateur.

16. Circuit de commutation comportant plusieurs dispositifs de commutation pour la réalisation du procédé d'après au moins l'une des revendications 1 à 15.
